# EUROPEAN PATENT APPLICATION

(11) **EP 4 682 293 A1**
(43) Date of publication of application: **21.01.2026**
(21) Application number: 24909550.6
(22) Date of filing: 31.05.2024
(51) Int. Cl.: C23F 1/30, C23F 1/16, C22C 9/05, C25F 3/14, C22F 1/08, C23F 1/02

(54) **POROUS METAL STRUCTURE AND PREPARATION METHOD THEREFOR**

(30) Priority: 29.12.2023 CN 202311862485
(71) Applicant: Contemporary Amperex Technology Co., Limited, Ningde, Fujian 352100 (CN)
(72) Inventor: LI, Zun, Ningde, Fujian 352100 (CN); WANG, Manman, Ningde, Fujian 352100 (CN); GE, Xiaoming, Ningde, Fujian 352100 (CN); OUYANG, Chuying, Ningde, Fujian 352100 (CN)
(74) Representative: Ziebig Hengelhaupt Intellectual Property Attorneys Patentanwaltskanzlei PartGmbB
(86) International application number: PCT/CN2024/096760
(87) International publication number: WO 2025/138585

(57) **Abstract**

The present application discloses a porous metal structure and a preparation method for the same. The preparation method for the porous metal structure includes the following steps: performing first de-alloying treatment on an alloy foil to form pores, then performing reduction annealing treatment in a reducing gas atmosphere, and finally performing second de-alloying treatment to obtain the porous metal structure. The preparation method for the porous metal structure provided in the present application can reduce the residual amount of the relatively active metal in the porous metal structure.

## Description

### CROSS-REFERENCE TO RELATED APPLICATIONS

The present application claims priority to Chinese Patent Application No. 202311862485.0, entitled "POROUS METAL STRUCTURE AND PREPARATION METHOD FOR THE SAME" filed on December 29, 2023, which is incorporated herein by reference in its entirety.

### TECHNICAL FIELD

The present application relates to a porous metal structure and a preparation method for the same.

### BACKGROUND

In recent years, batteries have been widely used in energy storage power systems such as water power stations, thermal power stations, wind power stations, and solar power stations, as well as in multiple fields such as consumer electronics, electric tools, electric bicycles, electric motorcycles, electric vehicles, military equipment, and aerospace. Negative electrodes are an important component of batteries and affect the performance of batteries. At present, the negative electrode of a battery is usually formed by arranging a negative electrode film layer containing negative electrode active materials such as graphite on a copper foil. However, with the continuous expansion of battery application fields, people's demand for high-energy-density batteries is increasing. Metal batteries and negative-electrode-free batteries may have high energy density since no negative electrode film layer is adopted. However, the problems of uneven metal deposition and dendrite formation restrict the development of metal batteries and negative-electrode-free batteries. Negative electrode current collectors, as an important component of metal batteries and negative-electrode-free batteries, are expected to alleviate the problems of the uneven metal deposition and dendrite formation when improved.

Porous metal structures have the advantages of light weight and large specific surface area. When applied to batteries, they can improve the energy density and reliability of the batteries. Especially when negative electrodes of metal batteries and negative-electrode-free batteries adopt porous metal structures, the problems of the uneven metal deposition and dendrite formation can be reduced.

De-alloying treatment of alloy foils is an effective method for obtaining porous metal structures. Alloys are usually composed of relatively active and inactive metal components. De-alloying treatment involves selectively dissolving the relatively active metal in the alloy to form pores. However, conventional methods for preparing porous metal structures often suffer from incomplete de-alloying and high residual amount of the relatively active metal. The high residual amount of the relatively active metal may reduce the flexibility of the prepared porous metal structure. In addition, the relatively reactive metal is more prone to oxidation, which may introduce additional side reactions.

The foregoing descriptions are provided only as background information relevant to the present application and do not necessarily constitute the prior art.

### SUMMARY

The present application discloses a porous metal structure and a preparation method for the same, which can reduce the residual amount of a relative active metal in the porous metal structure.

According to a first aspect, the present application provides a preparation method for a porous metal structure, which includes the following steps: performing first de-alloying treatment on an alloy foil to form pores, then performing reduction annealing treatment in a reducing gas atmosphere, and finally performing second de-alloying treatment to obtain the porous metal structure.

According to the preparation method provided in the example of the present application, after the first de-alloying treatment, reduction annealing treatment is performed on the obtained porous metal structure. When the reduction annealing treatment is performed on the porous metal structure obtained after the first de-alloying treatment, a relatively inactive metal oxide on a ligament surface of the porous metal structure is reduced to a metallic element under a reducing gas atmosphere, and the metallic element exhibits better heat diffusion ability. Moreover, both relatively active metal atoms and relatively inactive metal atoms in the porous metal structure will diffuse when heated. In the porous metal structure obtained after the first de-alloying treatment, the relatively active metal is a minor component (namely, with a lower content than the relatively inactive metal), which leads to a tendency to diffuse towards the high surface energy region, namely, the ligament surface. This reduces the overall surface energy of the porous metal structure. Therefore, after the reduction annealing treatment is performed on the porous metal structure obtained after the first de-alloying treatment, part of the relatively active metal will diffuse from the inside to the ligament surface of the porous metal structure. After the second de-alloying treatment, the metal on the ligament surface can be removed, thereby reducing the residual amount of the relatively active metal in the finally obtained porous metal structure.

In some examples, a process for the first de-alloying treatment includes a free-corrosion de-alloying process or an electrochemical-corrosion de-alloying process, and a process for the second de-alloying treatment includes the free-corrosion de-alloying process; and optionally, the process for the first de-alloying treatment includes the free-corrosion de-alloying process, and the process for the second de-alloying treatment includes the free-corrosion de-alloying process.

In some examples, the process for the first de-alloying treatment includes the free-corrosion de-alloying process, the process for the second de-alloying treatment includes the free-corrosion de-alloying process, and corrosion solutions used in the first de-alloying treatment and the second de-alloying treatment are acidic solutions.

Optionally, the acidic solutions include an acidic aqueous solution, and further optionally include one or a mixture of more of hydrochloric acid, sulfuric acid, phosphoric acid, and acetic acid.

In some examples, a concentration C1 of the acidic solution used in the first de-alloying treatment is greater than a concentration C2 of the acidic solution used in the second de-alloying treatment.

During the first de-alloying treatment, the content of the relatively active metal in the alloy is high, and the acidic solution with a higher concentration facilitates reducing the residual amount of the relatively active metal. During the second de-alloying treatment, the content of the relatively active metal in the alloy has been greatly reduced, and the acidic solution with a lower concentration is beneficial for improving the stability of the porous metal structure and reducing the corrosion of the relatively inactive metal.

In some examples, a treatment temperature T1 of the first de-alloying treatment is greater than a treatment temperature T2 of the second de-alloying treatment, and optionally, T1 ranges from 40°C to 80°C, and T2 ranges from 20°C to 30°C.

During the first de-alloying treatment, the content of the relatively active metal in the alloy is high, and the high treatment temperature facilitates reducing the residual amount of the relatively active metal. During the second de-alloying treatment, the content of the relatively active metal in the alloy has been greatly reduced, and the low treatment temperature is beneficial for improving the stability of the porous metal structure and reducing the corrosion of the relatively inactive metal.

In some examples, a treatment time t1 of the first de-alloying treatment is greater than a treatment time t2 of the second de-alloying treatment, and optionally, t1 is greater than or equal to 24 h, and t2 is less than or equal to 12 h.

During the first de-alloying treatment, the content of the relatively active metal in the alloy is high, and the long treatment time facilitates reducing the residual amount of the relatively active metal. During the second de-alloying treatment, the content of the relatively active metal in the alloy has been greatly reduced, and the short treatment time is beneficial for improving the stability of the porous metal structure and reducing the corrosion of the relatively inactive metal.

In some examples, a reducing gas used in the reduction annealing treatment includes ammonia gas or a mixture of hydrogen gas and inert gas.

In some examples, the reducing gas used in the reduction annealing treatment includes a mixture of hydrogen gas and inert gas, and the inert gas includes one or more of nitrogen gas, argon gas, and helium gas.

In some examples, a flow rate of the reducing gas used in the reduction annealing treatment ranges from 100 SCCM to 2000 SCCM.

In some examples, the reduction annealing treatment is performed in a tube furnace, and a heating rate of the tube furnace ranges from 2°C/min to 10°C/min.

In some examples, the reduction annealing treatment is performed in a tube furnace, and a heating rate of the tube furnace ranges from 5°C/min to 10°C/min.

In some examples, an average cooling rate of a cooling treatment process after the reduction annealing treatment is less than or equal to 2°C/min.

In some examples, the cooling treatment process is a furnace cooling process.

A slow cooling process can reduce the stress on the porous metal structure, making it less prone to curling.

In some examples, the cooling treatment after the reduction annealing treatment includes cooling to 50°C or below. In this way, the risk of surface oxidation in the transfer process of the porous metal structure from the furnace can be reduced.

In some examples, the alloy foil is a copper alloy foil, the copper alloy foil includes a Cu element and a non-Cu metal element, and a standard electrode potential of the non-Cu metal element is lower than a standard electrode potential of the Cu element.

Optionally, the non-Cu metal element includes one or more of Mn, Zn, Ni, Al, and Fe.

Optionally, an atomic content of the non-Cu metal element in the copper alloy foil is 60 at.% or more, and optionally ranges from 65 at.% to 80 at.%.

In some examples, a holding temperature for the reduction annealing treatment ranges from 700°C to 900°C; and/or, a holding time at the temperature of the reduction annealing treatment ranges from 20 min to 60 min.

By adjusting the holding temperature and/or holding time for the reduction annealing treatment within the above ranges, it promotes reduction of the relatively inactive metal oxide on the ligament surface of the porous metal structure obtained after the first de-alloying treatment to the metallic element, facilitates the heat diffusion of the relatively active metal atoms and relatively inactive metal atoms in the porous metal structure, and enables the diffusion of the relatively active metal atoms to the ligament surface of the porous metal structure, thereby reducing the residual amount of the relatively active metal. In addition, it can also make the porous metal have a stable structure, thereby avoiding the problem of structural collapse.

In some examples, before the first de-alloying treatment is performed on the alloy foil, the preparation method further includes: providing a cold-rolled alloy foil; performing recrystallization annealing treatment on the alloy foil, and then performing first cooling treatment to obtain an alloy foil with a first component phase; and performing phase separation heat treatment on the alloy foil with the first component phase, and then performing second cooling treatment to precipitate a second component phase and obtain an alloy foil with the first component phase and the second component phase, where a temperature of the phase separation heat treatment is less than a temperature of the recrystallization annealing treatment, and an average cooling rate of the second cooling treatment is less than an average cooling rate of the first cooling treatment.

By performing the recrystallization annealing treatment on the cold-rolled alloy foil, the alloy foil with good plastic processing ability and the first component phase can be obtained, and the grains in the alloy foil are mainly equiaxed grains. Then, by adopting the phase separation heat treatment with reduced temperature, the alloy foil with both the first component phase and the second component phase can be obtained, so that the porous metal structure after de-alloying treatment can be self-supported.

By performing the reduction annealing treatment after the first de-alloying treatment, the first cooling process after the recrystallization annealing treatment adopts the larger cooling rate, and the second cooling process after the phase separation heat treatment adopts the smaller cooling rate, it can partially or even completely repair the grain boundary corrosion cracks formed in the de-alloying treatment, and can also make the prepared porous metal structure have good strength and toughness.

In some examples, the average cooling rate of the first cooling treatment is greater than or equal to 100°C/min, and optionally greater than or equal to 200°C/min. This facilitates reducing the problem of element segregation at grain boundaries, and enables the diffusion of metal atoms near grain boundaries during subsequent reduction annealing treatment, thereby better repairing the grain boundary corrosion cracks and making the prepared porous metal structure have good toughness.

In some examples, the average cooling rate of the second cooling treatment is less than or equal to 2°C/min. This facilitates reducing the interphase stress between the first component phase and the second component phase in the alloy after phase separation, and enables the diffusion of metal atoms near grain boundaries during subsequent reduction annealing treatment, thereby better repairing the grain boundary corrosion cracks and making the prepared porous metal structure have good toughness.

In some examples, a process for the first cooling treatment is a water cooling process. This facilitates reducing the problem of element segregation at grain boundaries, and enables the diffusion of metal atoms near grain boundaries during subsequent reduction annealing treatment, thereby better repairing the grain boundary corrosion cracks and making the prepared porous metal structure have good toughness.

In some examples, a process for the second cooling treatment is a furnace cooling process. This facilitates reducing the interphase stress between the first component phase and the second component phase in the alloy after phase separation, and enables the diffusion of metal atoms near grain boundaries during subsequent reduction annealing treatment, thereby better repairing the grain boundary corrosion cracks and making the prepared porous metal structure have good toughness.

In some examples, the first cooling treatment includes cooling to 50°C or below. In this way, the risk of surface oxidation in the transfer process of the alloy foil from the furnace can be reduced.

In some examples, the second cooling treatment includes cooling to 50°C or below. In this way, the risk of surface oxidation in the transfer process of the alloy foil from the furnace can be reduced.

In some examples, the recrystallization annealing treatment is performed in a muffle furnace.

In some examples, the phase separation heat treatment is performed in a tube furnace, and optionally, a heating rate of the tube furnace ranges from 2°C/min to 10°C/min, and optionally ranges from 5°C/min to 10°C/min.

In some examples, a temperature of the recrystallization annealing treatment ranges from 720°C to 850°C.

In some examples, a holding time at the temperature of the recrystallization annealing treatment ranges from 10 min to 60 min.

By adjusting the temperature and/or time of the recrystallization annealing treatment within the above ranges, it is beneficial for obtaining the alloy foil with good plastic processing ability and the first component phase, and is also beneficial for precipitating the second component phase during phase separation heat treatment.

In some examples, a temperature of the phase separation heat treatment ranges from 620°C to 700°C.

In some examples, a holding time at the temperature of the phase separation heat treatment ranges from 60 min to 360 min.

By adjusting the temperature and/or the holding time for the phase separation heat treatment within the above ranges, it is beneficial for precipitating the second component phase during the phase separation heat treatment, and is also beneficial for obtaining the micron-level porous metal structure after subsequent reduction annealing treatment.

In some examples, the first component phase includes a gamma phase; and/or, the second component phase includes an alpha phase.

According to a second aspect, the present application provides a porous metal structure, which is prepared by the preparation method according to the first aspect of the present application.

In some examples, the porous metal structure is a porous copper structure, the porous copper structure includes a non-Cu metal element, and an atomic content of the non-Cu metal element is 0.3 wt% or less, and optionally 0.2 wt% or less.

### BRIEF DESCRIPTION OF THE DRAWINGS

FIG. 1 is a surface Mn element distribution picture of a porous copper structure obtained after second de-alloying treatment in Comparative Example 1;
FIG. 2 is a sectional Mn element distribution picture of a porous copper structure obtained after second de-alloying treatment in Comparative Example 1;
FIG. 3 is a surface Mn element distribution picture of a porous copper structure after reduction annealing treatment and before second de-alloying treatment in Example 1;
FIG. 4 is a surface Mn element distribution picture of a porous copper structure obtained after second de-alloying treatment in Example 1;
FIG. 5 is a sectional Mn element distribution picture of a porous copper structure after reduction annealing treatment and before second de-alloying treatment in Example 1;
FIG. 6 is a sectional Mn element distribution picture of a porous copper structure obtained after second de-alloying treatment in Example 1;
FIG. 7 is a surface morphology picture of a porous copper structure obtained after second de-alloying treatment in Example 1; and
FIG. 8 is a sectional morphology picture of a porous copper structure obtained after second de-alloying treatment in Example 1.

### DETAILED DESCRIPTION

Examples of a porous metal structure and a preparation method for the same specifically disclosed in the present application will be described below in detail with appropriate reference to the accompanying drawings. However, there may be situations where unnecessary detailed descriptions are omitted. For example, there may be situations where detailed descriptions of well-known matters and repeated descriptions of actually the same structure are omitted, for the purpose of preventing the following descriptions from becoming unnecessarily lengthy, and helping to understand by those skilled in the art. In addition, the drawings and subsequent descriptions are provided for those skilled in the art to fully understand the present application, and are not intended to limit the subject matters recited in the claims.

Any "range" disclosed in the present application is defined by a lower limit and an upper limit. A given range is defined by selecting a lower limit and an upper limit. The selected lower limit and upper limit define boundaries of the particular range. The range defined in this way may include or exclude end values, and may be arbitrarily combined, that is, any lower limit may be combined with any upper limit to form a new range. For example, if ranges of 60-120 and 80-110 are listed for a particular parameter, it is to be understood that ranges of 60-110 and 80-120 are also expectable. Additionally, if the minimum range values 1 and 2 and the maximum range values 3, 4 and 5 are listed, the following ranges are all expectable:1-3, 1-4, 1-5, 2-3, 2-4, and 2-5. In the present application, unless otherwise stated, the numerical range "a-b" represents an abbreviated representation of any combination of real numbers between a and b, where both a and b are real numbers. For example, the numerical range "0-5" means that all real numbers between 0 and 5 are listed herein, and "0-5" is merely an abbreviated representation of the combination of these numbers. In addition, when a certain parameter is expressed as an integer ≥2, it is equivalent to disclosing that the parameter is, for example, and integer such as 2, 3, 4, 5, 6, 7, 8, 9, 10, 11, 12, or the like.

Unless otherwise specified, all the examples and optional examples of the present application can be combined with each other to form new technical solutions, and such technical solutions should be considered to be included in the disclosure of the present application.

Unless otherwise specified, all the technical features and optional technical features of the present application can be combined with each other to form new technical solutions, and such technical solutions should be considered to be included in the disclosure of the present application.

Unless otherwise specified, all steps in the present application may be performed sequentially or randomly, and preferably, sequentially. For example, "the method including steps (a) and (b)" represents that the method may include steps (a) and (b) performed sequentially, or may include steps (b) and (a) performed sequentially. For example, "the method may further include step (c)" represents that step (c) may be added to the method in any order. For example, the method may include steps (a), (b) and (c), or steps (a), (c) and (b), or steps (c), (a) and (b), or the like.

In addition, in the present application, the term "multiple" or "a plurality of" indicates two or more.

In the present application, unless otherwise specially stated, the first feature being located "above" or "below" the second feature may be the first feature being in direct contact with the second feature, or the first feature being in indirect contact with the second feature through an intermediate medium. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

Unless otherwise stated, the terms used in the present application have well-known meanings as commonly understood by those skilled in the art.

Unless otherwise stated, the values of the parameters mentioned in the present application may be measured by various test methods commonly used in the art, and for example, may be measured according to the test methods given in the examples of the present application. Unless otherwise stated, the testing temperature for each parameter is 25°C.

An example of the present application provides a preparation method for a porous metal structure.

The preparation method includes the following steps: performing first de-alloying treatment on an alloy foil to form pores, then performing reduction annealing treatment in a reducing gas atmosphere, and finally performing second de-alloying treatment to obtain the porous metal structure.

Alloys are usually composed of relatively active and inactive metal components. When de-alloying treatment is performed on the alloy, the content of the relatively active metal in the alloy continuously decreases as the reaction progresses. However, when the content drops to a low level, even under very intense reaction conditions such as heating, electrolysis, and concentrated acid corrosion treatment, it is difficult to further effectively reduce the residual amount of the relatively active metal. This is because, in the later stage of de-alloying treatment, the relatively active metal will remain inside the alloy, requiring more pathways for the dissolution. Moreover, in addition to the relatively active metal that has not yet dissolved contributing to a portion of the residue, the relatively active metal ions that have already dissolved inside the alloy may also contribute to a portion of the residue. This is because the relatively active metal ions that have already dissolved inside the alloy have a larger diffusion pathway relative to the surface, and in a washing process, it cannot be guaranteed that the dissolved metal ions will be completely replaced into a detergent. Therefore, some of the dissolved metal ions inside the alloy may also contribute to a portion of the residue. The high residual amount of the relatively active metal may reduce the flexibility of the prepared porous metal structure. In addition, the relatively reactive metal is more prone to oxidation, which may introduce additional side reactions.

According to the preparation method provided in the example of the present application, after the first de-alloying treatment, reduction annealing treatment is performed on the obtained porous metal structure. When the reduction annealing treatment is performed on the porous metal structure obtained after the first de-alloying treatment, a relatively inactive metal oxide on a ligament surface of the porous metal structure is reduced to a metallic element under a reducing gas atmosphere, and the metallic element exhibits better heat diffusion ability. Moreover, both relatively active metal atoms and relatively inactive metal atoms in the porous metal structure will diffuse when heated. In the porous metal structure obtained after the first de-alloying treatment, the relatively active metal is a minor component (namely, with a lower content than the relatively inactive metal), which leads to a tendency to diffuse towards the high surface energy region, namely, the ligament surface. This reduces the overall surface energy of the porous metal structure. Therefore, after the reduction annealing treatment is performed on the porous metal structure obtained after the first de-alloying treatment, part of the relatively active metal will diffuse from the inside to the ligament surface of the porous metal structure. After the second de-alloying treatment, the metal on the ligament surface can be removed, thereby reducing the residual amount of the relatively active metal in the finally obtained porous metal structure. In addition, after the reduction annealing treatment is performed on the porous metal structure obtained after the first de-alloying treatment, the relatively inactive metal element formed by the reduction of the metal oxide on the ligament surface will undergo a recrystallization process and may also self-diffuse into an alloy phase (with lower content of the relatively active metal and higher content of the relatively inactive metal) or a pure relatively inactive metal element phase.

In some examples, the alloy foil may be a copper alloy foil, the copper alloy foil may include a Cu element and a non-Cu metal element, and a standard electrode potential of the non-Cu metal element is lower than a standard electrode potential of the Cu element, that is, the activity of the non-Cu metal element is greater than that of the Cu element. Optionally, the non-Cu metal element may include one or more of Mn, Zn, Ni, Al, and Fe.

The content of the Cu element and the non-Cu metal element is not specifically limited. In some examples, an atomic content of the non-Cu metal element in the copper alloy foil may be 60 at. % or more, and optionally ranges from 65 at.% to 85 at.% and ranges from 65 at.% to 80 at.%. This is beneficial for applying the porous copper structure to a negative electrode of a battery.

In some examples, the copper alloy foil may further include a small amount of non-metal element impurities such as C and Si.

In some examples, a process for the first de-alloying treatment includes a free-corrosion de-alloying process or an electrochemical-corrosion de-alloying process.

In some examples, the process for the first de-alloying treatment may include the free-corrosion de-alloying process, and the process for the second de-alloying treatment may include the free-corrosion de-alloying process.

The process for the second de-alloying treatment including the free-corrosion de-alloying process can reduce metal oxidation. Optionally, the treatment temperature of the second de-alloying treatment is less than the treatment temperature of the first de-alloying treatment.

Both the free-corrosion de-alloying process and the electrochemical-corrosion de-alloying process may adopt technologies known in the art. The washing process after de-alloying may include water washing and alcohol washing. Water washing can reduce the content of metal ions in the porous metal structure, while alcohol washing can reduce the moisture content in the pores of the porous metal structure. Deionized water may be used in water washing. Water washing may be performed 3 to 6 times, which is not limited in this example of the present application. Anhydrous ethanol may be used in alcohol washing. Alcohol washing may be performed 3 to 6 times, which is not limited in this example of the present application. A drying process after the washing process may be performed in a vacuum drying oven. The drying temperature may range from 30°C to 50°C. In this way, metal oxidation can be reduced.

In some examples, a process for the first de-alloying treatment includes a free-corrosion de-alloying process, a process for the second de-alloying treatment includes the free-corrosion de-alloying process, and corrosion solutions used in the first de-alloying treatment and the second de-alloying treatment may be acidic solutions.

Optionally, the acidic solutions may include an acidic aqueous solution.

Optionally, the acidic solutions may include one or a mixture of more of hydrochloric acid, sulfuric acid, phosphoric acid, and acetic acid. Optionally, the acidic solution may include a hydrochloric acid aqueous solution.

The corrosion solution (also known as electrolyte) used in the electrochemical-corrosion de-alloying process may include an acidic (such as hydrochloric acid, sulfuric acid, phosphoric acid, and acetic acid) aqueous solution, a neutral salt (such as sodium chloride) aqueous solutions, or a mixed aqueous solution of the above components.

In some examples, a process for the first de-alloying treatment includes a free-corrosion de-alloying process, a process for the second de-alloying treatment includes the free-corrosion de-alloying process, and a concentration C1 of the acidic solution used in the first de-alloying treatment may be greater than a concentration C2 of the acidic solution used in the second de-alloying treatment.

During the first de-alloying treatment, the content of the relatively active metal in the alloy is high, and the acidic solution with a higher concentration facilitates reducing the residual amount of the relatively active metal. During the second de-alloying treatment, the content of the relatively active metal in the alloy has been greatly reduced, and the acidic solution with a lower concentration is beneficial for improving the stability of the porous metal structure and reducing the corrosion of the relatively inactive metal.

In some examples, corrosion solutions used in the first de-alloying treatment and the second de-alloying treatment are acidic solutions, and a treatment temperature T1 of the first de-alloying treatment may be greater than a treatment temperature T2 of the second de-alloying treatment.

During the first de-alloying treatment, the content of the relatively active metal in the alloy is high, and the high treatment temperature facilitates reducing the residual amount of the relatively active metal. During the second de-alloying treatment, the content of the relatively active metal in the alloy has been greatly reduced, and the low treatment temperature is beneficial for improving the stability of the porous metal structure and reducing the corrosion of the relatively inactive metal.

Optionally, T1 may range from 40°C to 80°C.

Optionally, T2 may range from 20°C to 30°C.

In some examples, corrosion solutions used in the first de-alloying treatment and the second de-alloying treatment are acidic solutions, and a treatment time t1 of the first de-alloying treatment may be greater than a treatment time t2 of the second de-alloying treatment.

During the first de-alloying treatment, the content of the relatively active metal in the alloy is high, and the long treatment time facilitates reducing the residual amount of the relatively active metal. During the second de-alloying treatment, the content of the relatively active metal in the alloy has been greatly reduced, and the short treatment time is beneficial for improving the stability of the porous metal structure and reducing the corrosion of the relatively inactive metal.

Optionally, t1 may be greater than or equal to 24 h, and optionally range from 24 h to 60 h or from 32 h to 48 h.

Optionally, t2 may be less than or equal to 12 h, and optionally range from 4 h to 12 h or from 6 h to 10 h.

In some examples, a reducing gas used in the reduction annealing treatment may include ammonia gas or a mixture of hydrogen gas and inert gas. Optionally, the Inert gas may include one or more of nitrogen gas, argon gas, and helium gas.

Optionally, a reducing gas used in the reduction annealing treatment may include a mixture of hydrogen gas and inert gas, and the volume fraction of hydrogen gas in the reducing gas may be greater than or equal to 2%, and optionally range from 2% to 10%. In this way, not only can the metal oxide on the ligament surface be reduced to a metal element with better diffusion ability, but also the safety of the operation can be ensured.

In some examples, a flow rate of the reducing gas used in the reduction annealing treatment may range from 100 SCCM to 2000 SCCM.

The reduction annealing treatment may adopt a program heating process. The program heating process includes a heating section, an insulation section, and a cooling section.

In some examples, the reduction annealing treatment may be performed in a tube furnace.

Optionally, a heating rate of the tube furnace may range from 2°C/min to 10°C/min, and optionally ranges from 5°C/min to 10°C/min.

In some examples, a holding temperature for the reduction annealing treatment may range from 700°C to 900°C. For example, it may be 700°C, 710°C, 720°C, 730°C, 740°C, 750°C, 760°C, 770°C, 780°C, 790°C, 800°C, 810°C, 820°C, 830°C, 840°C, 850°C, 860°C, 870°C, 880°C, 890°C, or 900°C, or within a range composed of any values above, optionally range from 720°C to 900°C, from 750°C to 880°C, or from 750°C to 850°C.

In some examples, a holding time at the temperature of the reduction annealing treatment may range from 20 min to 60 min. For example, it may be 20 min, 25 min, 30 min, 35 min, 40 min, 45 min, 50 min, 55 min, or 60 min, or within a range composed of any values above, optionally range from 25 min to 55 min or from 30 min to 50 min.

By adjusting the holding temperature and/or holding time for the reduction annealing treatment within the above ranges, it promotes reduction of the relatively inactive metal oxide on the ligament surface of the porous metal structure obtained after the first de-alloying treatment to the metallic element, facilitates the heat diffusion of the relatively active metal atoms and relatively inactive metal atoms in the porous metal structure, and enables the diffusion of the relatively active metal atoms to the ligament surface of the porous metal structure, thereby reducing the residual amount of the relatively active metal. In addition, it can also make the porous metal have a stable structure, thereby avoiding the problem of structural collapse.

In a case that the holding temperature and/or holding time for the reduction annealing treatment are low and/or short, the heat diffusion of the relatively active metal atoms and relatively inactive metal atoms is slow, and the heat diffusion effect is poor, which is not beneficial for the full diffusion of the relatively active metal atoms to the ligament surface, and not beneficial for reducing the residual amount of the relatively active metal.

In a case that the holding temperature for the reduction annealing treatment is high, the relatively inactive metal atoms on the ligament surface undergo intense heat diffusion, thereby greatly promoting the reduction of the surface free energy in the porous metal structure. Therefore, the pore structure of the porous metal structure is prone to shrinkage and even sintering, and the porosity of the porous metal structure decreases, which is not beneficial for reducing the residual amount of the relatively active metal.

In a case that the holding time for the reduction annealing treatment is long, the heat diffusion of the relatively active metal atoms and relatively inactive metal atoms is faster and more complete, and the diffusion effect is better. In this case, the pore structure of the porous metal structure is prone to shrinkage, and the porosity of the porous metal structure decreases, which is also not conducive to reducing the residual amount of the relatively active metal.

In some examples, an average cooling rate of a cooling treatment process after the reduction annealing treatment may be less than or equal to 2°C/min. A slow cooling process can reduce the stress on the porous metal structure, making it less prone to curling.

In some examples, the cooling treatment process may be a furnace cooling process. The furnace cooling process refers to a process in which the porous metal structure is not removed from a furnace body in a high-temperature state, but slowly cooled naturally together with the furnace body from the high-temperature state.

In some examples, cooling treatment after the reduction annealing treatment may be to cool to 50°C or below. In this way, the risk of surface oxidation in the transfer process of the porous metal structure from the furnace can be reduced.

In some examples, before the first de-alloying treatment is performed on the alloy foil, the preparation method further includes: providing a cold-rolled alloy foil; performing recrystallization annealing treatment on the alloy foil, and then performing first cooling treatment to obtain an alloy foil with a first component phase; and performing phase separation heat treatment on the alloy foil with the first component phase, and then performing second cooling treatment to precipitate a second component phase and obtain an alloy foil with the first component phase and the second component phase, where a temperature of the phase separation heat treatment is less than a temperature of the recrystallization annealing treatment, and an average cooling rate of the second cooling treatment is less than an average cooling rate of the first cooling treatment.

The thickness of the alloy foil used for preparing a battery-grade porous metal structure is usually very small, such as at a micron level (usually tens to hundreds of microns). Therefore, the preparation process for the alloy foil usually requires multiple passes of cold rolling. However, after repeated cold rolling and thinning, the alloy is prone to problems such as rolling orientation, element segregation, and stress accumulation, which will reduce the structural strength of the alloy foil. By performing the recrystallization annealing treatment on the cold-rolled alloy foil, the alloy foil with good plastic processing ability can be obtained. However, when preparing the porous metal structure with high porosity by performing de-alloying treatment on the alloy foil, the volume shrinkage of the alloy foil is severe, resulting in that the prepared porous metal structures cannot be self-support and grain boundary corrosion cracks are easily produced, consequently affecting the practical application of the porous metal structure.

By performing the recrystallization annealing treatment on the cold-rolled alloy foil, the alloy foil with good plastic processing ability and the first component phase can be obtained, and the grains in the alloy foil are mainly equiaxed grains. Then, by adopting the phase separation heat treatment with reduced temperature, the alloy foil with both the first component phase and the second component phase can be obtained, so that the porous metal structure after de-alloying treatment can be self-supported.

The porous metal structure obtained after the first de-alloying treatment is prone to grain boundary corrosion cracks. This is because there is a certain atomic diffusion phenomenon in the cooling process after the recrystallization annealing treatment, the relatively active metal atoms in the alloy are prone to enrichment at grain boundaries, and the relatively inactive metal atoms are prone to enrichment on two sides of the grain boundaries. When performing de-alloying treatment, the relatively active metal component is preferentially corroded, while the uncorroded component has poor diffusion ability, consequently easily leading to grain boundary corrosion cracks. In addition, the diffusion dynamic of metal atoms on the surface of the alloy is relatively strong, thereby forming a relatively uniform pore structure on the surface through diffusion. However, the diffusion dynamic of metal atoms inside the alloy is weak due to low surface energy. Therefore, after de-alloying treatment and grain boundary corrosion, the metal atoms at the grain boundaries in the alloy tend to remain in their original positions. In this case, the cracks left by the de-alloying treatment cannot be filled, resulting in a large number of grain boundary corrosion cracks in the prepared porous metal structure. Moreover, the toughness of the prepared porous metal structure is still poor, and large cracks easily occur after bending.

By performing the reduction annealing treatment after the first de-alloying treatment, the metal atoms near the grain boundaries (mainly relatively inactive metal atoms, but also including relatively active metal atoms that have not been completely corroded) can diffuse when heated, and the grain boundary corrosion cracks formed after the first de-alloying treatment can be repaired, thereby making the prepared porous metal structure have good toughness.

The first cooling process after the recrystallization annealing treatment adopts a relatively high cooling rate. This is because recrystallization annealing treatment is high-temperature heat treatment, there is also a certain atomic diffusion phenomenon in the cooling process after the high-temperature heat treatment, the relatively active metal atoms in the alloy are prone to enrichment at grain boundaries, and the relatively inactive metal atoms are prone to enrichment on two sides of the grain boundaries, consequently affecting the effects of subsequent de-alloying treatment and reduction annealing treatment. After the recrystallization annealing treatment, the rapid cooling process can quickly reduce the internal temperature of the alloy foil to a lower temperature and shorten the cooling time, thereby avoiding the formation of more serious element segregation problems at the grain boundaries as much as possible, facilitating the diffusion of metal atoms near the grain boundaries during subsequent reduction annealing treatment, better repairing grain boundary corrosion cracks, and making the prepared porous metal structure have good toughness.

The second cooling process after the phase separation heat treatment adopts a relatively low cooling rate. This is because the alloy after phase separation has an interphase stress between the first component phase and the second component phase, and the slow cooling process can reduce the interphase stress, thereby facilitating the diffusion of metal atoms near the grain boundaries during subsequent reduction annealing treatment, better repairing the grain boundary corrosion cracks, and making the prepared porous metal structure have good toughness.

Therefore, the preparation method provided in this example of the present application can partially or even completely repair the grain boundary corrosion cracks formed after the de-alloying treatment, and can also make the prepared porous metal structure have good strength and toughness.

In some examples, the cold-rolled alloy foil may be directly purchased commercially or obtained through known preparation processes in the art. For example, it may be obtained through processes such as melting, cutting, annealing, and cold rolling.

In some examples, an average cooling rate of the first cooling treatment may be greater than or equal to 100°C/min, and optionally greater than or equal to 200°C/min. This facilitates reducing the problem of element segregation at grain boundaries, and enables the diffusion of metal atoms near grain boundaries during subsequent reduction annealing treatment, thereby better repairing the grain boundary corrosion cracks and making the prepared porous metal structure have good toughness.

In some examples, a process for the first cooling treatment may be a water cooling process. This facilitates reducing the problem of element segregation at grain boundaries, and enables the diffusion of metal atoms near grain boundaries during subsequent reduction annealing treatment, thereby better repairing the grain boundary corrosion cracks and making the prepared porous metal structure have good toughness. The water cooling process refers to a process of removing the alloy foil from the high-temperature state and then immersing it in water for rapid cooling. Optionally, the temperature of the water adopted may range from 20°C to 30°C.

In some examples, the first cooling treatment may decrease the temperature of the alloy foil to 50°C or below. In this way, the risk of surface oxidation in the transfer process of the alloy foil from the furnace can be reduced.

In some examples, an average cooling rate of the second cooling treatment may be less than or equal to 2°C/min. This facilitates reducing the interphase stress between the first component phase and the second component phase in the alloy after phase separation, and enables the diffusion of metal atoms near grain boundaries during subsequent reduction annealing treatment, thereby better repairing the grain boundary corrosion cracks and making the prepared porous metal structure have good toughness.

In the present application, an average cooling rate = (temperature before cooling-temperature after cooling)/total cooling time.

In some examples, a process for the second cooling treatment may be a furnace cooling process. This facilitates reducing the interphase stress between the first component phase and the second component phase in the alloy after phase separation, and enables the diffusion of metal atoms near grain boundaries during subsequent reduction annealing treatment, thereby better repairing the grain boundary corrosion cracks and making the prepared porous metal structure have good toughness. The furnace cooling process refers to a process in which the alloy foil is not removed from a furnace body in a high-temperature state, but slowly cooled naturally together with the furnace body from the high-temperature state.

In some examples, the second cooling treatment may decrease the temperature of the alloy foil to 50°C or below. In this way, the risk of surface oxidation in the transfer process of the alloy foil from the furnace can be reduced.

In some examples, the recrystallization annealing treatment may be performed in a muffle furnace.

In some examples, the temperature for the recrystallization annealing treatment may range from 720°C to 850°C. For example, it may be 720°C, 730°C, 740°C, 750°C, 760°C, 770°C, 780°C, 790°C, 800°C, 810°C, 820°C, 830°C, 840°C, or 850°C, or within a range composed of any values above, optionally range from 760°C to 820°C.

In some examples, the holding time at the temperature of the recrystallization annealing treatment may range from 10 min to 60 min. For example, it may be 10 min, 15 min, 20 min, 25 min, 30 min, 35 min, 40 min, 45 min, 50 min, 55 min, or 60 min, or within a range composed of any values above, optionally range from 15 min to 45 min.

By adjusting the temperature and/or time of the recrystallization annealing treatment within the above ranges, it is beneficial for obtaining the alloy foil with good plastic processing ability and the first component phase, and is also beneficial for precipitating the second component phase during phase separation heat treatment.

In some examples, before the recrystallization treatment, some antioxidant materials may be coated on the surface of the alloy foil to reduce the surface oxidation problem. For example, the antioxidant material may be obtained through fine processing by adding an ultra-fine inorganic metal oxide into a high-purity silicate solution.

In some examples, the phase separation heat treatment may adopt a program heating process. The program heating process includes a heating section, an insulation section, and a cooling section.

In some examples, the phase separation heat treatment may be performed in a tube furnace. Optionally, a heating rate of the tube furnace may range from 2°C/min to and optionally ranges from 5°C/min to 10°C/min.

In some examples, the phase separation heat treatment may be performed under the protection of inert gas. Optionally, the Inert gas may include one or more of nitrogen gas, argon gas, and helium gas.

In some examples, the temperature for the phase separation heat treatment may range from 620°C to 700°C. For example, it may be 620°C, 630°C, 640°C, 650°C, 660°C, 670°C, 680°C, 690°C, or 700°C, or within a range composed of any values above, optionally range from 640°C to 680°C.

In some examples, the holding time at the temperature of the phase separation heat treatment may range from 60 min to 360 min. For example, it may be 60 min, 90 min, 120 min, 150 min, 180 min, 210 min, 240 min, 270 min, 300 min, 330 min, or 360 min, or within a range composed of any values above.

By adjusting the temperature and/or the holding time for the phase separation heat treatment within the above ranges, it is beneficial for precipitating the second component phase during the phase separation heat treatment, and is also beneficial for obtaining the micron-level porous metal structure after subsequent reduction annealing treatment.

In some examples, the first component phase may include a gamma phase. Taking an Mn-Cu alloy foil as an example, the first component phase may include gamma-phase Mn-Cu alloy.

In some examples, the second component phase may include an alpha phase. Taking an Mn-Cu alloy foil as an example, the second component phase may include alpha-phase Mn.

An example of the present application further provides a porous metal structure prepared by the preparation method, where the residual amount of the relatively active metal is relatively small.

In some examples, the porous metal structure may be a porous copper structure, the porous copper structure includes a non-Cu metal element, and an atomic content of the non-Cu metal element may be 0.3 wt% or less, and optionally 0.2 wt% or less.

In some examples, the porous metal structure may also have fewer grain boundary corrosion cracks, and better strength and toughness. Optionally, the porous metal structure may have no grain boundary corrosion cracks.

In some examples, the pores in the porous metal structure are mostly at a micron level.

### Examples

The following examples provide a more specific description of the content disclosed in the present application. These examples are only used for descriptive purposes, as various modifications and changes within the scope of the content disclosed in the present application are obvious to those skilled in the art. Unless otherwise stated, all parts, percentages, and ratios described in the following examples are based on weight, all reagents used in the examples are commercially available or synthesized by conventional methods and can be used directly without further treatment, and all instruments used in the examples are commercially available.

### Example 1

### (1) Preparation of Mn-Cu alloy foil

Pure copper (with purity ≥ 99.9%) and pure manganese (with purity ≥ 99.9%) raw materials were provided. Mn-Cu alloy was prepared through vacuum induction melting. The atomic content of Mn in the Mn-Cu alloy was 75 at.%, and an atomic content of Cu was 25 at.%. The Mn-Cu alloy prepared through vacuum induction melting was cut. Then, processes such as homogenization annealing treatment and multiple passes of cold rolling were performed to obtain an Mn-Cu alloy foil with a thickness of about 250 µm.

The Mn-Cu alloy foil was placed in a muffle furnace for recrystallization annealing treatment at 800°C for holding time of 20 min to obtain gamma-phase Mn-Cu alloy. The gamma-phase Mn-Cu alloy foil was taken out, immediately cooled to 50°C or below, cleaned and dried with anhydrous ethanol, and then placed in a tube of a tube furnace. A gas path system was mounted. First, the airtightness of a pipeline was checked. If there were no problems, vacuum pumping to -1 MPa was performed, and nitrogen gas was fed to atmospheric pressure to complete once of gas replacement and achieve the purpose of preliminary oxygen removal. After three times of gas replacement were completed, the gas was continuously fed for 60 min to further remove residual oxygen in the pipeline system. Subsequently, program heating was enabled. The temperature was increased to 660°C at a rate of 5°C/min under the protection of a nitrogen gas atmosphere for phase separation heat treatment. The holding time was 210 min. After that, furnace cooling was performed to 50°C or below. A pressure reducing valve and a main valve of a gas cylinder were closed. The sample was taken out to obtain an alpha/gamma two-phase Mn-Cu alloy foil.

### (2) First de-alloying treatment

The Mn-Cu alloy foil after phase separation heat treatment was cut into 30mm*30mm samples. Then, the sample were immersed in 1 mol/L hydrochloric acid aqueous solution for first de-alloying treatment at 50°C for 48 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a porous copper structure.

### (3) Reduction annealing treatment

The porous copper structure obtained after the first de-alloying treatment was placed into the tube of the tube furnace. The gas path system was mounted. First, the airtightness of the pipeline was checked. If there were no problems, vacuum pumping to -1 MPa was performed, and a mixture of 5% H₂ and 95% Ar (volume ratio) was fed to atmospheric pressure to complete once of gas replacement and achieve the purpose of preliminary oxygen removal. After three times of gas replacement were completed, the gas was continuously fed for 60 min to further remove residual oxygen in the pipeline system. Subsequently, program heating was enabled and the gas flow rate of the mixture of hydrogen and argon was adjusted to 500 SCCM. The heating rate was 10°C/min, the holding temperature was 800°C, and the holding time was 40 min. After the holding was completed, the samples obtained after reduction annealing were furnace cooled to 50°C or below. The pressure reducing valve and the main valve of the gas cylinder were closed. The samples were taken out.

### (4) Second de-alloying treatment

The porous copper structure obtained after reduction annealing treatment was immersed in 0.5 mol/L hydrochloric acid aqueous solution for second de-alloying treatment at 25°C for 8 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a final porous copper structure.

### Comparative Example 1

### (1) Preparation of Mn-Cu alloy foil

Pure copper (with purity ≥ 99.9%) and pure manganese (with purity ≥ 99.9%) raw materials were provided. Mn-Cu alloy was prepared through vacuum induction melting. The atomic content of Mn in the Mn-Cu alloy was 75 wt.%, and an atomic content of Cu was 25 wt.%. The Mn-Cu alloy prepared through vacuum induction melting was cut. Then, processes such as homogenization annealing treatment and multiple passes of cold rolling were performed to obtain an Mn-Cu alloy foil with a thickness of about 250 µm.

### (2) First de-alloying treatment

The prepared Mn-Cu alloy foil was cut into 30mm*30mm samples. Then, the sample were immersed in 1 mol/L hydrochloric acid aqueous solution for first de-alloying treatment at 50°C for 48 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a porous copper structure.

### (3) Second de-alloying treatment

The porous copper structure obtained after the first de-alloying treatment was immersed in 0.5 mol/L hydrochloric acid aqueous solution for second de-alloying treatment at 25°C for 8 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a final porous copper structure.

### Comparative Example 2

### (1) Preparation of Mn-Cu alloy foil

Pure copper (with purity ≥ 99.9%) and pure manganese (with purity ≥ 99.9%) raw materials were provided. Mn-Cu alloy was prepared through vacuum induction melting. The atomic content of Mn in the Mn-Cu alloy was 75 at.%, and an atomic content of Cu was 25 at.%. The Mn-Cu alloy prepared through vacuum induction melting was cut. Then, processes such as homogenization annealing treatment and multiple passes of cold rolling were performed to obtain an Mn-Cu alloy foil with a thickness of about 250 µm.

### (2) First de-alloying treatment

The prepared Mn-Cu alloy foil was cut into 30mm*30mm samples. Then, the sample were immersed in 1 mol/L hydrochloric acid aqueous solution for first de-alloying treatment at 50°C for 48 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a porous copper structure.

### (3) Second de-alloying treatment

The porous copper structure obtained after the first de-alloying treatment was immersed in 12 mol/L concentrated hydrochloric acid aqueous solution for second de-alloying treatment at 25°C for 8 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a final porous copper structure.

### Comparative Example 3

### (1) Preparation of Mn-Cu alloy foil

Pure copper (with purity ≥ 99.9%) and pure manganese (with purity ≥ 99.9%) raw materials were provided. Mn-Cu alloy was prepared through vacuum induction melting. The atomic content of Mn in the Mn-Cu alloy was 75 at.%, and an atomic content of Cu was 25 at.%. The Mn-Cu alloy prepared through vacuum induction melting was cut. Then, processes such as homogenization annealing treatment and multiple passes of cold rolling were performed to obtain an Mn-Cu alloy foil with a thickness of about 250 µm.

### (2) First de-alloying treatment

The prepared Mn-Cu alloy foil was cut into 30mm*30mm samples. Then, the sample were immersed in 1 mol/L hydrochloric acid aqueous solution for first de-alloying treatment at 50°C for 48 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a porous copper structure.

### (3) Second de-alloying treatment

The porous copper structure obtained after first de-alloying treatment was immersed in 0.5 mol/L hydrochloric acid aqueous solution for second de-alloying treatment at 70°C for 8 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a final porous copper structure.

### Comparative Example 4

### (1) Preparation of Mn-Cu alloy foil

Pure copper (with purity ≥ 99.9%) and pure manganese (with purity ≥ 99.9%) raw materials were provided. Mn-Cu alloy was prepared through vacuum induction melting. The atomic content of Mn in the Mn-Cu alloy was 75 at.%, and an atomic content of Cu was 25 at.%. The Mn-Cu alloy prepared through vacuum induction melting was cut. Then, processes such as homogenization annealing treatment and multiple passes of cold rolling were performed to obtain an Mn-Cu alloy foil with a thickness of about 250 µm.

### (2) First de-alloying treatment

The prepared Mn-Cu alloy foil was cut into 30mm*30mm samples. Then, the sample were immersed in 1 mol/L hydrochloric acid aqueous solution for first de-alloying treatment at 50°C for 48 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a porous copper structure.

### (3) Second de-alloying treatment

Electrochemical corrosion was performed on the porous copper structure obtained after the first de-alloying treatment for second de-alloying treatment. During electrochemical corrosion, the porous copper structure obtained after the first de-alloying treatment was used as an anode, a Pt sheet was used as a cathode, 0.5 mol/L hydrochloric acid aqueous solution was used as an electrolyte, the corrosion voltage was 0.1 V, the corrosion temperature was 25°C, and the corrosion time was 2 h. After completion, the samples were taken out and washed with deionized water five times, with the amount of 100 ml each time. Then, the samples were washed with anhydrous ethanol three times, with the amount of 100 ml each time. Finally, the samples were placed in a vacuum drying oven for drying at 35°C and -0.1 MPa for 2 h to obtain a final porous copper structure.

The porous copper structures obtained before the second de-alloying treatment in the examples and comparative examples were cut into samples with a size of approximately 1 cm*1 cm. ICP testing was performed by using an ICAP XP inductively-coupled plasma emission spectrometer to obtain the content of residual Mn.

The porous copper structures obtained after second de-alloying treatment in the examples and comparative examples were cut into samples with a size of approximately 1 cm*1 cm. ICP testing was performed by using the ICAP XP inductively-coupled plasma emission spectrometer to obtain the content of residual Mn.

Testing results are as shown in Table 1. In Table 1, the symbol '-' indicates that no corresponding treatment has been performed.

**Table 1**

| S/N | First de-alloying treatment | | | Reduction annealing treatment | | Second de-alloying treatment | | | Content of residual Mn (wt%) | |
|---|---|---|---|---|---|---|---|---|---|---|
| | Concentration (mol/L) | Temperature (°C) | Time (h) | Temperature (°C) | Time (min) | Concentration (mol/L) | Temperature (°C) | Time (h) | Before second de-alloying treatment | After second de-alloying treatment |
| | | | | | | | | | ICP | ICP |
| Example 1 | 1 | 50 | 48 | 800 | 40 | 0.5 | 25 | 8 | 0.506 | 0.031 |
| Comparative Example 1 | 1 | 50 | 48 | - | - | 0.5 | 25 | 8 | 0.512 | 0.477 |
| Comparative Example 2 | 1 | 50 | 48 | - | - | 12 | 25 | 8 | 0.512 | 0.421 |
| Comparative Example 3 | 1 | 50 | 48 | - | - | 1 | 70 | 8 | 0.512 | 0.392 |
| Comparative Example 4 | 1 | 50 | 48 | - | - | Electrochemical corrosion | | | 0.512 | 0.360 |

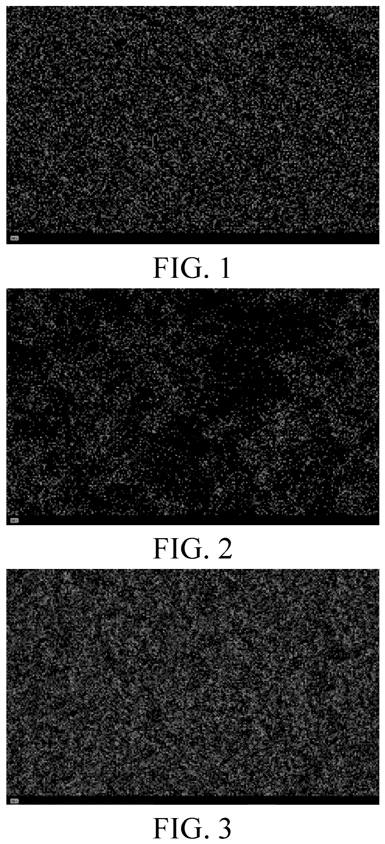

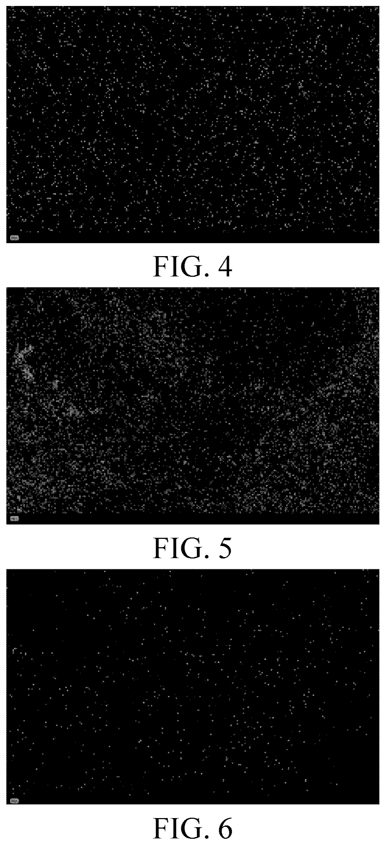

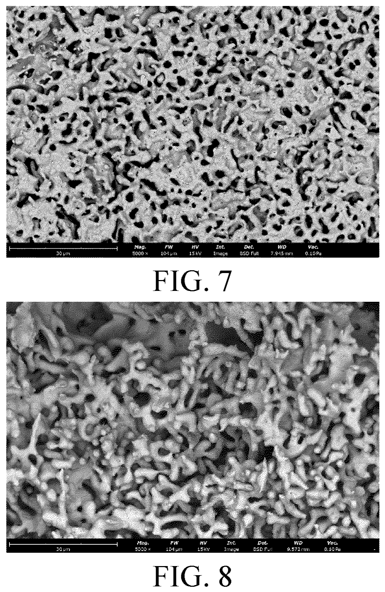

FIG. 1 is a surface Mn element distribution picture of a porous copper structure obtained after second de-alloying treatment in Comparative Example 1. FIG. 2 is a sectional Mn element distribution picture of a porous copper structure obtained after second de-alloying treatment in Comparative Example 1. FIG. 3 is a surface Mn element distribution picture of a porous copper structure after reduction annealing treatment and before second de-alloying treatment in Example 1. FIG. 4 is a surface Mn element distribution picture of a porous copper structure obtained after second de-alloying treatment in Example 1. FIG. 5 is a sectional Mn element distribution picture of a porous copper structure after reduction annealing treatment and before second de-alloying treatment in Example 1. FIG. 6 is a sectional Mn element distribution picture of a porous copper structure obtained after second de-alloying treatment in Example 1. FIG. 7 is a surface morphology picture of a porous copper structure obtained after second de-alloying treatment in Example 1. FIG. 8 is a sectional morphology picture of a porous copper structure obtained after second de-alloying treatment in Example 1.

According to FIG. 1 to FIG. 8 and the testing results in Table 1, it can be seen that by performing reduction annealing treatment after the first de-alloying treatment and before the second de-alloying treatment, the prepared porous copper structure can have a lower content of residual Mn.

According to the testing results of Comparative Examples 1 to 4, it can also be seen that after the first de-alloying treatment, the content of residual Mn has decreased to a relatively low level. At this point, even with very intense reaction conditions such as heating, electrolysis, and concentrated acid corrosion treatment, it is difficult to effectively further reduce the content of residual Mn.

### Example 2

The preparation process of the porous copper structure was the same as that in Example 1, except that the holding temperature for the reduction annealing treatment was 700°C.

### Example 3

The preparation process of the porous copper structure was the same as that in Example 1, except that the holding temperature for the reduction annealing treatment was 900°C.

### Example 4

The preparation process of the porous copper structure was the same as that in Example 1, except that the holding temperature for the reduction annealing treatment was 650°C.

### Example 5

The preparation process of the porous copper structure was the same as that in Example 1, except that the holding temperature for the reduction annealing treatment was 950°C.

### Example 6

The preparation process of the porous copper structure was the same as that in Example 1, except that the holding time for the reduction annealing treatment was 20 min.

### Example 7

The preparation process of the porous copper structure was the same as that in Example 1, except that the holding time for the reduction annealing treatment was 30 min.

### Example 8

The preparation process of the porous copper structure was the same as that in Example 1, except that the holding time for the reduction annealing treatment was 50 min.

### Example 9

The preparation process of the porous copper structure was the same as that in Example 1, except that the holding time for the reduction annealing treatment was 60 min.

### Example 10

The preparation process of the porous copper structure was the same as that in Example 1, except that the holding time for the reduction annealing treatment was 10 min.

### Example 11

The preparation process of the porous copper structure was the same as that in Example 1, except that the holding time for the reduction annealing treatment was 70 min.

The porous copper structures after the reduction annealing treatment and before the second de-alloying treatment in Examples 1 to 11 were broken off to expose cross sections. EDS surface scanning was performed by using a Phenom XL G2 desktop scanning electron microscope to measure the content of residual Mn.

The porous copper structures after the second de-alloying treatment in Examples 1 to 11 were broken off to expose cross sections. EDS surface scanning was performed by using the Phenom XL G2 desktop scanning electron microscope to measure the content of residual Mn.

**Table 2**

| S/N | Reduction annealing treatment | | Content of residual Mn (wt%) | | | |
|---|---|---|---|---|---|---|
| | Temperature | Time (min) | Before second de-alloying treatment | | After second de-alloying treatment | |
| | | | EDS | ICP | EDS | ICP |
| Example 1 | 800 | 40 | 11.98 | 0.506 | 0.11 | 0.031 |
| Example 2 | 700 | 40 | 10.26 | 0.523 | 0.06 | 0.124 |
| Example 3 | 900 | 40 | 12.73 | 0.526 | 0.13 | 0.037 |
| Example 4 | 650 | 40 | 6.18 | 0.507 | 0.06 | 0.305 |
| Example 5 | 950 | 40 | 12.51 | 0.519 | 0.09 | 0.292 |
| Example 6 | 800 | 20 | 6.47 | 0.509 | 0.08 | 0.146 |
| Example 7 | 800 | 30 | 9.10 | 0.518 | 0.15 | 0.101 |
| Example 8 | 800 | 50 | 12.54 | 0.510 | 0.09 | 0.039 |
| Example 9 | 800 | 60 | 12.72 | 0.525 | 0.14 | 0.153 |
| Example 10 | 800 | 10 | 4.98 | 0.524 | 0.17 | 0.276 |
| Example 11 | 800 | 70 | 12.70 | 0.516 | 0.16 | 0.269 |

From the testing results of Examples 1 to 11, it can be seen that by further adjusting the holding temperature and/or holding time for the reduction annealing treatment, the content of residual Mn in the porous copper structure can be further reduced.

From the testing results of Examples 1 to 5, it can also be seen that as the holding temperature for the reduction annealing treatment increases, the content of Mn tested through EDS in the porous copper structure increases after the reduction annealing treatment and before the second de-alloying treatment, that is, more manganese atoms diffuse to the ligament surface of the porous copper structure, which facilitates reducing the content of residual Mn in the finally prepared porous copper structure. Moreover, the holding temperature for the reduction annealing treatment should not be too high. In this case, the heat diffusion of the copper element on the ligament surface is intense, which greatly promotes the reduction of the surface free energy of the porous copper structure. Therefore, the pore structure of the porous copper structure is prone to shrinkage and even sintering. Moreover, the porosity of the porous copper structure decreases, which is not beneficial for further reducing the content of residual Mn in the porous copper structure.

From the testing results of Examples 1 and 6 to 11, it can also be seen that as the holding time for the reduction annealing treatment increases, the content of Mn tested through EDS in the porous copper structure increases after the reduction annealing treatment and before the second de-alloying treatment, that is, more manganese atoms diffuse to the ligament surface of the porous copper structure, which facilitates reducing the content of residual Mn in the finally prepared porous copper structure. Moreover, the holding time for the reduction annealing treatment should not be too long. In this case, since the heat diffusion of copper and manganese atoms is faster and more complete, and the diffusion effect is better, the pore structure of the porous copper structure is prone to shrinkage. Moreover, the porosity of the porous copper structure decreases, which is not beneficial for further reducing the content of residual Mn in the porous copper structure.

It needs to be stated that the present application is not limited to the examples above. The above described examples are merely exemplary, and examples having substantially the same technical idea and the same effects within the scope of the technical solution of the present application are all included in the technical scope of the present application. In addition, other examples constructed by applying various modifications conceivable to those skilled in the art to the examples and combining some of the constituent elements of the examples without departing from the scope of the essence of the present application are also included in the scope of the present application.

## Claims

1. A preparation method for a porous metal structure, comprising:
performing first de-alloying treatment on an alloy foil to form pores, then performing reduction annealing treatment in a reducing gas atmosphere, and finally performing second de-alloying treatment to obtain the porous metal structure.

2. The preparation method according to claim 1, wherein
a process for the first de-alloying treatment comprises a free-corrosion de-alloying process or an electrochemical-corrosion de-alloying process, and a process for the second de-alloying treatment comprises the free-corrosion de-alloying process; and
optionally, the process for the first de-alloying treatment comprises the free-corrosion de-alloying process, and the process for the second de-alloying treatment comprises the free-corrosion de-alloying process.

3. The preparation method according to any one of claims 1 to 2, wherein the process for the first de-alloying treatment comprises the free-corrosion de-alloying process, the process for the second de-alloying treatment comprises the free-corrosion de-alloying process, corrosion solutions used in the first de-alloying treatment and the second de-alloying treatment are acidic solutions, and optionally, the acidic solutions comprise an acidic aqueous solution, and further optionally comprise one or a mixture of more of hydrochloric acid, sulfuric acid, phosphoric acid, and acetic acid.

4. The preparation method according to claim 3, wherein
a concentration C1 of the acidic solution used in the first de-alloying treatment is greater than a concentration C2 of the acidic solution used in the second de-alloying treatment; and/or,
a treatment temperature T1 of the first de-alloying treatment is greater than a treatment temperature T2 of the second de-alloying treatment, and optionally, T1 ranges from 40°C to 80°C, and T2 ranges from 20°C to 30°C; and/or,
a treatment time t1 of the first de-alloying treatment is greater than a treatment time t2 of the second de-alloying treatment, and optionally, t1 is greater than or equal to 24 h, and t2 is less than or equal to 12 h.

5. The preparation method according to any one of claims 1 to 4, wherein the reduction annealing treatment satisfies at least one of the following conditions (1) to (8):
(1) a reducing gas used in the reduction annealing treatment comprises ammonia gas or a mixture of hydrogen gas and inert gas;
(2) the reducing gas used in the reduction annealing treatment comprises a mixture of hydrogen gas and inert gas, and the inert gas comprises one or more of nitrogen gas, argon gas, and helium gas;
(3) a flow rate of the reducing gas used in the reduction annealing treatment ranges from 100 SCCM to 2000 SCCM;
(4) the reduction annealing treatment is performed in a tube furnace, and a heating rate of the tube furnace ranges from 2°C/min to 10°C/min;
(5) the reduction annealing treatment is performed in a tube furnace, and a heating rate of the tube furnace ranges from 5°C/min to 10°C/min;
(6) an average cooling rate of a cooling treatment process after the reduction annealing treatment is less than or equal to 2°C/min;
(7) the cooling treatment process is a furnace cooling process; and
(8) cooling treatment after the reduction annealing treatment comprises cooling to 50°C or below.

6. The preparation method according to any one of claims 1 to 5, wherein the alloy foil is a copper alloy foil, the copper alloy foil comprises a Cu element and a non-Cu metal element, and a standard electrode potential of the non-Cu metal element is lower than a standard electrode potential of the Cu element;
optionally, the non-Cu metal element comprises one or more of Mn, Zn, Ni, Al, and Fe; and/or,
optionally, an atomic content of the non-Cu metal element in the copper alloy foil is 60 at.% or more, and optionally ranges from 65 at.% to 80 at.%.

7. The preparation method according to any one of claims 1 to 6, wherein a holding temperature for the reduction annealing treatment ranges from 700°C to 900°C; and/or, a holding time at the temperature of the reduction annealing treatment ranges from 20 min to 60 min.

8. The preparation method according to any one of claims 1 to 7, wherein
before the first de-alloying treatment is performed on the alloy foil, the preparation method further comprises:
providing a cold-rolled alloy foil;
performing recrystallization annealing treatment on the alloy foil, and then performing first cooling treatment to obtain an alloy foil with a first component phase; and
performing phase separation heat treatment on the alloy foil with the first component phase, and then performing second cooling treatment to precipitate a second component phase and obtain an alloy foil with the first component phase and the second component phase, wherein a temperature of the phase separation heat treatment is less than a temperature of the recrystallization annealing treatment, and an average cooling rate of the second cooling treatment is less than an average cooling rate of the first cooling treatment.

9. The preparation method according to claim 8, wherein the average cooling rate of the first cooling treatment is greater than or equal to 100°C/min, and optionally greater than or equal to 200°C/min; and/or, the average cooling rate of the second cooling treatment is less than or equal to 2°C/min.

10. The preparation method according to any one of claims 8 to 9, wherein a process for the first cooling treatment is a water cooling process; and/or, a process for the second cooling treatment is a furnace cooling process.

11. The preparation method according to any one of claims 8 to 10, wherein the first cooling treatment comprises cooling to 50°C or below; and/or, the second cooling treatment comprises cooling to 50°C or below.

12. The preparation method according to any one of claims 8 to 11, wherein the recrystallization annealing treatment is performed in a muffle furnace; and/or, the phase separation heat treatment is performed in a tube furnace, and optionally, a heating rate of the tube furnace ranges from 2°C/min to and optionally ranges from 5°C/min to 10°C/min.

13. The preparation method according to any one of claims 8 to 12, wherein
a temperature of the recrystallization annealing treatment ranges from 720°C to 850°C; and/or,
a holding time at the temperature of the recrystallization annealing treatment ranges from 10 min to 60 min; and/or,
a temperature of the phase separation heat treatment ranges from 620°C to 700°C; and/or,
a holding time at the temperature of the phase separation heat treatment ranges from 60 min to 360 min.

14. The preparation method according to any one of claims 8 to 13, wherein the first component phase comprises a gamma phase; and/or, the second component phase comprises an alpha phase.

15. A porous metal structure prepared by the preparation method according to any one of claims 1 to 14.

16. The porous metal structure according to claim 15, wherein the porous metal structure is a porous copper structure, the porous copper structure comprises a non-Cu metal element, and an atomic content of the non-Cu metal element is 0.3 wt% or less, and optionally 0.2 wt% or less.
